# EUROPEAN PATENT APPLICATION

(11) **EP 4 550 073 A1**
(43) Date of publication of application: **07.05.2025**
(21) Application number: 22949187.3
(22) Date of filing: 23.12.2022
(51) Int. Cl.: G05D 1/00

(54) **AIRCRAFT LANDING GUIDING APPARATUS AND METHOD, AND AIRCRAFT LANDING CONTROL METHOD AND SYSTEM**

(30) Priority: 30.06.2022 CN 202210765023
(71) Applicant: Ehang Intelligent Equipment (Guangzhou) Co., Ltd., Guangzhou, Guangdong 510000 (CN)
(72) Inventor: HU, Huazhi, Guangzhou, Guangdong 510000 (CN); MA, Haocheng, Guangzhou, Guangdong 510000 (CN); LIN, Fengyu, Guangzhou, Guangdong 510000 (CN)
(74) Representative: Kieffer, Valentin
(86) International application number: PCT/CN2022/141675
(87) International publication number: WO 2024/001111

(57) **Abstract**

Enbodiments of the present application provide a guiding apparatus for aircraft landing, which includes: a light-emitting array, disposed in a target landing area of the aircraft, including at least one light-emitting unit located at a target landing point and a plurality of light-emitting units arranged around the at least one light-emitting unit; a light-emitting control unit, electrically connected to the light-emitting array, and configured to control the light-emitting array to emit light in accordance with preset light-emitting timing. Enbodiments of the present application also provide a guiding method for aircraft landing, and an aircraft landing control method and system, and related devices. The present application can significantly improves the precision of fixed-point landing of the aircraft, and effectively eliminates the influence of external conditions on the fixed-point landing of the aircraft, and has low hardware requirements of system.

## Description

### TECHNICAL FIELD

Embodiments of the present application relate to the field of aircraft, in particular to a guiding apparatus and method for aircraft landing, aircraft landing control method and system, and related devices.

### BACKGROUND

In recent years, with rapid development of the unmanned aerial vehicle (UAV) technology, the technique of guiding aircraft especially the auto-piloted vertical take-off and landing aircraft, to land to a fixed-position, has gone through a corresponding stage of development:

Utilizing GNSS (Global Navigation Satellite System) to guide the landing position, which is not accurate enough;

Utilizing RTK GNSS (RealTime Kinematic GNSS, Carrier Phase Differential Spherical Satellite Navigation System) to guide the landing site, which is that the signals are susceptible to interference, requires constant communication with the ground, expensive, and not suitable for landing in woods and near tall buildings, etc;

Setting specific logo pattern (for example, but not limited to, a two-dimensional code, etc.) at the target landing point for guiding, which is easy to be affecting to identifying the picture logo pattern when encountering poor lighting at the landing platform or the logo pattern is obscured by shadows, or the landing platform material is reflective, or the material is contaminated, etc;

Setting up a single light at the target landing point for positioning, which requires precise synchronization of the camera and the attitude sensors (e.g., IMU), and needs additional distance sensors, which has high hardware requirements of the aircraft.

### SUMMARY

Embodiments of the present application provide a guiding apparatus and method for aircraft landing, a aircraft landing control method and system, and related devices to significantly improve the control accuracy of the fixed-point landing of an aircraft, eliminate the influence of external conditions, and have low hardware requirements of the aircraft.

According to a first aspect, embodiments of the present application provide a guiding apparatus for aircraft landing, including:
a light-emitting array, disposed in a target landing area of an aircraft, including at least one light-emitting unit located at a target landing point and a plurality of light-emitting units arranged around the at least one light-emitting unit;
a light-emitting control unit, electrically connected to the light-emitting array, configured to control the light-emitting array to emit light in accordance with preset light-emitting timing.

In some possible implementations, the plurality of light-emitting units are arranged in N circles centered on the target landing point, where N is an integer greater than or equal to 1.

In some possible implementations, the distance between the light-emitting units arranged in the M-th circle and the target landing point is preset multiples of the distance between the light-emitting units arranged in the M-1st circle and the target landing point, where M is an integer and 1 < M≤N.

In some possible implementations, the circle is of regular or irregular shape.

In some possible implementations, the light-emitting timing includes an array checking segment including at least one light-emitting unit and an unit checking segment including at least one light-emitting unit.

According to a second aspect, embodiments of the present application provide a guiding method for aircraft landing, including the steps of:
controlling a guiding apparatus aircraft landing as described above to emit light in accordance with preset light-emitting timing.

According to a third aspect, embodiments of the present application provide a method of controlling aircraft landing, including the steps of:
controlling a foregoing described guiding apparatus for aircraft landing to emit light in accordance with a preset light-emitting timing;
gathering light signals of the light-emitting array on the aircraft, and controlling the aircraft to land to a target landing point by outputting corresponding flight control instructions in accordance with the gathered light signals.

In some possible implementations, the step of outputting corresponding flight control instructions in accordance with the gathered light signals includes:
identifying the light-emitting timing and light-emitting positions of the light signals;
matching the light-emitting timing with a preset light-emitting timing to calculate the position of each light-emitting unit;
obtaining the real-time position, attitude and target landing point of the aircraft in accordance with the positions of the light-emitting units.

In some possible implementations, the step of identifying the light-emitting timing and light-emitting positions of the light signals includes:
obtaining the movement trajectory of bright spots, the movement trajectory includes positions of the bright spots in each frame;
determining the light-emitting timing and light-emitting positions of each light-emitting unit in accordance with the movement trajectory of the bright spots.

In some possible implementations, the step of obtaining the movement trajectory of bright spots includes:
obtaining the Q-th bright spot of the current frame, Q being an integer and 1 ≤ Q ≤ the number of all bright spots of the current frame;
obtaining the P-th bright spot of the preceding frame, which is the closest bright spot to the Q-th bright spot in the preceding frame, P being an integer and 1 ≤ P ≤ the number of all bright spots of the preceding frame;
determining whether the Q-th bright spot is the closest bright spot to the P-th bright spot in the current frame, if so and the distance between them is within a preset threshold, then the two bright spots are the images respectively in the preceding frame and the current frame of the same light-emitting unit;
traversing Q from 1 to the number of all bright spots in the current frame, repeating the steps of obtaining the movement trajectory of bright spots.

In some possible implementations, the step of obtaining the movement trajectory of bright spots further includes:
determining that the light-emitting unit corresponding to the P-th bright spot is out in the current frame if the Q-th bright spot is not the closest bright spot to the P-th bright spot in the current frame;

In some possible implementations, the step of obtaining the movement trajectory of bright spots further includes:
determining that the light-emitting unit corresponding to the P-th bright spot is out in the current frame if the distance between the Q-th bright spot and the P-th bright spot is greater than a preset threshold range.

In some possible implementations, the step of obtaining the movement trajectory of bright spots further includes:
determining that the light-emitting unit corresponding to the Q-th bright spot is on in the current frame if the distance between the Q-th bright spot and the P-th bright spot is greater than a preset range of threshold values.

According to a fourth aspect, embodiments of the present application provide a aircraft landing control system including:
the foregoing described guiding apparatus for aircraft landing;
a light signals gathering unit,which is configured to gather light signals emitted by the light-emitting array;
a aircraft control unit, electrically connected to the light-emitted signals gathering unit, and is configured to output corresponding flight control instructions to control the aircraft to land to a target landing point in accordance with the gathered light-emitted signals.

In some possible implementations, the id aircraft control unit is configured to:
identify the light-emitted timing and light-emitted positions of the light-emitted signals;
calculate the real-time position, attitude and target landing point of the aircraft in accordance with the light-emitted timing and light-emitted positions;
output corresponding flight control instructions to control the aircraft to land to the target landing point in accordance with the real-time position, attitude and target landing point of the aircraft.

In some possible implementations, the identifying the light-emitting timing and light-emitting positions of the light signals includes:
obtaining the movement trajectory of bright spots, the movement trajectory includes positions of the bright spots in each frame;
determining the light-emitting timing and light-emitting positions of each light-emitting unit in accordance with the movement trajectory of the bright spots.

In some possible implementations, the obtaining the movement trajectory of bright spots includes:
obtaining the Q-th bright spot of the current frame, Q being an integer and 1 ≤ Q ≤ the number of all bright spots of the current frame;
obtaining the P-th bright spot of the preceding frame, which is the closest bright spot to the Q-th bright spot in the preceding frame, P being an integer and 1 ≤ P ≤ the number of all bright spots of the preceding frame;
determining whether the Q-th bright spot is the closest bright spot to the P-th bright spot in the current frame, if so and the distance between them is within a preset threshold, then the two bright spots are the images respectively in the preceding frame and the current frame of the same light-emitting unit;
traversing Q from 1 to the number of all bright spots in the current frame, repeating the steps of obtaining the movement trajectory of bright spots.

In some possible implementations, the obtaining the movement trajectory of bright spots further includes:
determining that the light-emitting unit corresponding to the P-th bright spot is out in the current frame if the Q-th bright spot is not the closest bright spot to the P-th bright spot in the current frame.

In some possible implementations, the obtaining the movement trajectory of bright spots further includes:
determining that the light-emitting unit corresponding to the P-th bright spot is out in the current frame if the distance between the Q-th bright spot and the P-th bright spot is greater than a preset threshold range.

In some possible implementations, the obtaining the movement trajectory of bright spots further includes:
determining that the light-emitting unit corresponding to the Q-th bright spot is on in the current frame if the distance between the Q-th bright spot and the P-th bright spot is greater than a preset range of threshold values.

According to a fifth aspect, embodiments of the present application provide a computer-readable storage medium, the computer-readable storage medium is configured to store computer program codes, when the computer program codes running on a computer, enables the computer to perform a method of any one of the foregoing described possible implementations of the second and third aspects.

The beneficial effects of the embodiments of present application are:

Embodiments of the present application significantly improve the precision of the fixed-point landing of an aircraft by setting at least one light-emitting array in the target landing area of the aircraft, each light-emitting array includes a plurality of light-emitting units, and each light-emitting unit emits light in accordance with a preset light-emitting timing, thereby guides the aircraft to land at the target landing point corresponding to the preset light-emitting timing, thus effectively avoid the fixed-point landing of the aircraft being affected by external conditions, and has low requirements of hardware.

### BRIEF DESCRIPTION OF DRAWINGS

In order to more clearly illustrate the technical solutions in the embodiments of the present application or the prior art, the accompanying drawings required for describing the embodiments or the prior art are briefly introduced below. Of course, the drawings described below are some embodiments of the present disclosure. For a person of ordinary skill in the art, other accompanying drawings can also be obtained based on these accompanying drawings without creative work.
FIG. 1 is a schematic diagram of structure of a guiding apparatus for aircraft landing according to an embodiment of the present application.
FIG. 2 is a schematic diagram of flow of an aircraft landing control method according to an embodiment of the present application.
FIG. 3 is a schematic diagram of structure of an aircraft landing control system according to an embodiment of the present application.
FIG. 4 is a schematic diagram of arrangement of light-emitting units in an aircraft landing control system according to an embodiment of the present application.
FIG. 5 is a light-emitting timing diagram of light-emitting units in an aircraft landing control system according to an embodiment of the present application.
FIG. 6 is a schematic diagram of an aircraft landing process of an aircraft landing control system according to an embodiment of the present application.

### DETAILED DESCRIPTION OF EMBODIMENTS

In order to clarify the purpose, technical solutions, and advantages of the present disclosure, the technical solutions of the present disclosure will be described in details with reference to the accompanying drawings in the embodiments of the present disclosure. Of course, the described embodiments are part of the embodiments of the present disclosure, and not all of the embodiments. In the absence of conflict, the embodiments in the present disclosure and the features in the embodiments can be combined with each other.

It should be noted that: in the drawings, the same or similar numbers throughout represent the same or similar elements or elements with the same or similar functions; in the description of the present disclosure, the terms "center", "vertical", "horizontal", "front", "back", "left", "right", "upright", "laying down", "top", "bottom", "inside", "outside" and the like indicate the orientation or position relationship based on the orientation or position relationship shown in the drawings, which is only for the convenience of describing the present disclosure and simplifying the description, rather than indicating or implying that the device or element referred to must have a specific orientation, or be constructed and operated in a specific orientation, and therefore cannot be understood as limiting the scope of protection of the present disclosure; in the description of the present disclosure, "first", "second", etc. are only used to distinguish each other, rather than to indicate their importance and order, etc.

In the description of the present disclosure, unless otherwise clearly specified and limited, the terms "amounted", "coupled", and "connected" should be understood in a broad sense, for example, it can be a fixed connection, a movable connection, or a detachable connection; it can be a mechanical connection or an electrical connection; it can be directly connected or indirectly connected through an intermediate medium, or it can be the internal connection of two components, etc. For a person of ordinary skill in the art, the specific meanings of the foregoing terms in the present disclosure can be understood in specific circumstances.

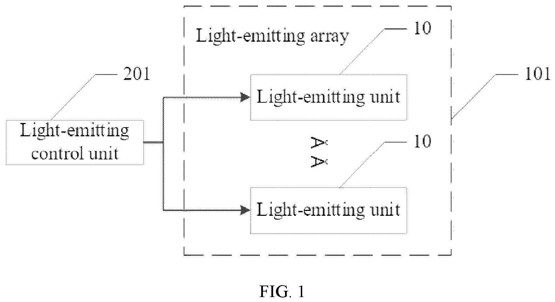

With reference to FIG. 1, embodiments of the present application provide a guiding apparatus for aircraft landing, which includes:
light-emitting array 101, disposed in a target landing area of an aircraft, including at least one light-emitting unit 10 located at a target landing point and a plurality of light-emitting units 10 arranged around the at least one light-emitting unit;
light-emitting control unit 102, electrically connected to the light-emitting array, configured to control the light-emitting array to emit light in accordance with a preset light-emitting timing.

In some possible implementations, the plurality of light-emitting units are arranged in N circles centered on the target landing point, where N is an integer greater than or equal to 1.

In some possible implementations, the distance between the light-emitting units arranged in the M-th circle and the target landing point is preset multiples of the distance between the light-emitting units arranged in the M-1st circle and the target landing point, where M is an integer and 1 < M≤N.

In some possible implementations, the plurality of light-emitting units 10 are arranged of regular or irregular shape, for example, they may be arranged in circles, and the geometry of the circles may be square, rectangular or circular.

In some possible implementations, the light-emitting timing includes an array checking segment including at least one light-emitting unit and an unit checking segment including at least one light-emitting unit.

Embodiments of the present application also provide a guiding method for aircraft landing, which includes the steps of:
controlling the guiding apparatus for aircraft landing as described in any one of the possible implementations of the foregoing embodiments to emit light in accordance with a preset light-emitting timing.

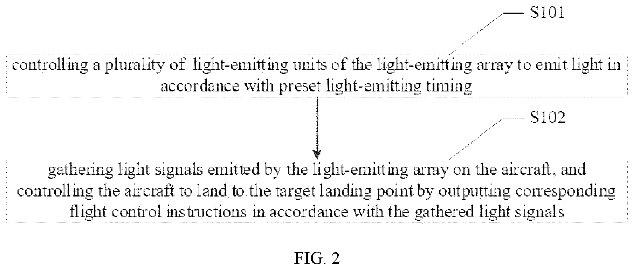

With reference to FIG. 2, embodiments of the present application also provide an aircraft landing control method, which includes the following steps:

In step S101, controlling the guiding apparatus for aircraft landing as described in any one of the possible implementations of the foregoing embodiments to emit light in accordance with preset light-emitting timing;

In step S102, gathering light signals emitted by the light-emitting array on the aircraft, and controlling the aircraft to land to the target landing point by outputting corresponding flight control instructions in accordance with the gathered light signals.

In some possible implementations, the step of outputting corresponding flight control instructions in accordance with the gathered light signals includes:
identifying the light-emitting timing and light-emitting positions of the light signals;
matching the light-emitting timing with the preset light-emitting timing to calculate the position of each light-emitting unit;
obtaining the real-time position, attitude and target landing point of the aircraft in accordance with the positions of the light-emitting units.

In some possible implementations, the step of identifying the light-emitting timing and light-emitting positions of the light signals includes:
obtaining the movement trajectory of bright spots, the movement trajectory includes the positions of the bright spots in each frame;
determining the light-emitting timing and light-emitting positions of each light-emitting unit in accordance with the movement trajectory of the bright spots.

In some possible implementations, the step of obtaining the movement trajectory of bright spots includes:
obtaining the Q-th bright spot of the current frame, Q being an integer and 1 ≤ Q ≤ the number of all bright spots of the current frame;
obtaining the P-th bright spot of the preceding frame, which is the closest bright spot to the Q-th bright spot in the preceding frame, P being an integer and 1 ≤ P ≤ the number of all bright spots of the preceding frame;
determining whether the Q-th bright spot is the closest bright spot to the P-th bright spot in the current frame, if so and the distance between them is within a preset threshold, then the two bright spots are the images respectively in the preceding frame and the current frame of the same light-emitting unit;
traversing Q from 1 to the number of all bright spots in the current frame, repeating the steps of obtaining the movement trajectory of bright spots.

In some possible implementations, the step of obtaining the movement trajectory of bright spots further includes:
determining that the light-emitting unit corresponding to the P-th bright spot is out in the current frame if the Q-th bright spot is not the closest bright spot to the P-th bright spot in the current frame.

In some possible implementations, the step of obtaining the movement trajectory of bright spots further includes:
determining that the light-emitting unit corresponding to the P-th bright spot is out in the current frame if the distance between the Q-th bright spot and the P-th bright spot is greater than a preset threshold range.

In some possible implementations, the step of obtaining the movement trajectory of bright spots further includes:
determining that the light-emitting unit corresponding to the Q-th bright spot is on in the current frame if the distance between the Q-th bright spot and the P-th bright spot is greater than a preset threshold range.

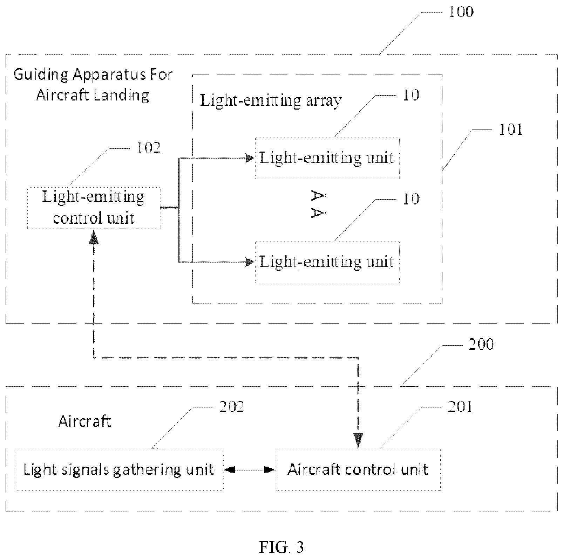

With reference to FIG. 3, embodiments of the present application also provide an aircraft landing control system, the system includes:
a guiding apparatus for aircraft landing according to any one of the foregoing possible implementations of the embodiments;
a light signals gathering unit, which is configured to gather light signals emitted by the light-emitting array;
an aircraft control unit, electrically connected to the light signals gathering unit, configured to output corresponding flight control instructions to control the aircraft to land to a target landing point in accordance with the gathered light signals.

In some possible implementations, the aircraft control unit is configured to:
identify the light-emitting timing and light-emitting positions of the light signals;
calculate the real-time position, attitude and target landing point of the aircraft in accordance with the light-emitting timing and light-emitting positions;
output corresponding flight control instructions to control the aircraft to land to the target landing point in accordance with the real-time position, attitude and target landing point of the aircraft.

Embodiments of the present application also provide an aircraft landing control system, which has the following additional parts compared with the foregoing described aircraft landing control system:
the aircraft control unit is further electrically connected to the light-emitting control unit for sending landing preparing instructions to the ground crew and/or the aircraft control unit when preparing for landing;
the light-emitting control unit is further configured to control the light-emitting array to emit light in accordance with a preset light-emitting time according to the landing preparing instructions which is sent by the aircraft control unit and/or the ground crew as guiding signals for aircraft landing.

In some possible implementations, the identifying the light-emitting timing and light-emitting positions of the light signals includes:
obtaining the movement trajectory of bright spots, the movement trajectory includes the positions of the bright spots in each frame;
determining the light-emitting timing and the light-emitting positions of each light-emit unit in accordance with the movement trajectory of the bright spots.

In some possible implementations, the obtaining the movement trajectory of bright spots includes the configuration to:
obtaining the Q-th bright spot of the current frame, Q being an integer and 1 ≤ Q ≤ the number of all bright spots of the current frame;
obtaining the P-th bright spot of the preceding frame, which is the closest bright spot to the Q-th bright spot in the preceding frame, P being an integer and 1 ≤ P ≤ the number of all bright spots of the preceding frame;
determining whether the Q-th bright spot is the closest bright spot to the P-th bright spot in the current frame, if so and the distance between them is within a preset threshold, then the two bright spots are the images respectively in the preceding frame and the current frame of the same light-emitting unit;
traversing Q from 1 to the number of all bright spots in the current frame, repeating the steps of obtaining the movement trajectory of bright spots.

In some possible implementations, the obtaining the movement trajectory of bright spots further includes:
determining that the light-emitting unit corresponding to the P-th bright spot is out in the current frame if the Q-th bright spot is not the closest bright spot to the P-th bright spot in the current frame.

In some possible implementations, the obtaining the movement trajectory of bright spots further includes:
determining that the light-emitting unit corresponding to the P-th bright spot is out in the current frame if the distance between the Q-th bright spot and the P-th bright spot is greater than a preset threshold range.

In some possible implementations, the obtaining the movement trajectory of bright spots further includes:
determining that the light-emitting unit corresponding to the Q-th bright spot is on in the current frame if the distance between the Q-th bright spot and the P-th bright spot is greater than a preset threshold range.

Embodiments of the present application dispose a lights array including a plurality of lights, i.e., a light-emitting array, in a target landing area of a aircraft, with each light being regarded as a light-emitting unit, which respectively flashes periodically in accordance with certain and unique flashing pattern (i.e., light-emitting timing), and cameras amounted on the aircraft image the lights emitted on the ground. With the video frames captured by the cameras the image of the lights, the embodiments identify the lights which are prearranged on the ground according to the unique flashing pattern of each light by using vision algorithm for matching multi-frames, exclude the interference of other light sources, determine the pixel coordinates of each detected light on the video frames, use the algorithm to calculate the position and attitude of the aircraft, thereby guide the aircraft to land at the target landing point in the center of the lights array.

Embodiments of the present application can be applied to all auto-piloted vertical take-off and landing aircraft, effectively resolve the problem of fixed-point landing of the aircraft under the condition of insufficient GNSS positioning accuracy. Compared with RTK GNSS or using 2D code or other marking patterns to guide the fixed-point landing, the embodiments can avoid the difficulties caused by the poor lighting at the landing platform or the 2D code being covered by the shadows, the reflections of the materials of the landing platform, or the contamination of the materials, e.t.c.. Compared with the single-light guiding, the embodiments can greatly improve the landing accuracy and reduce the hardware requirement of the aircraft.

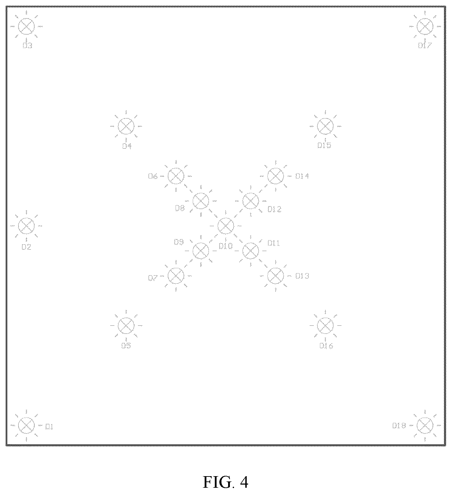

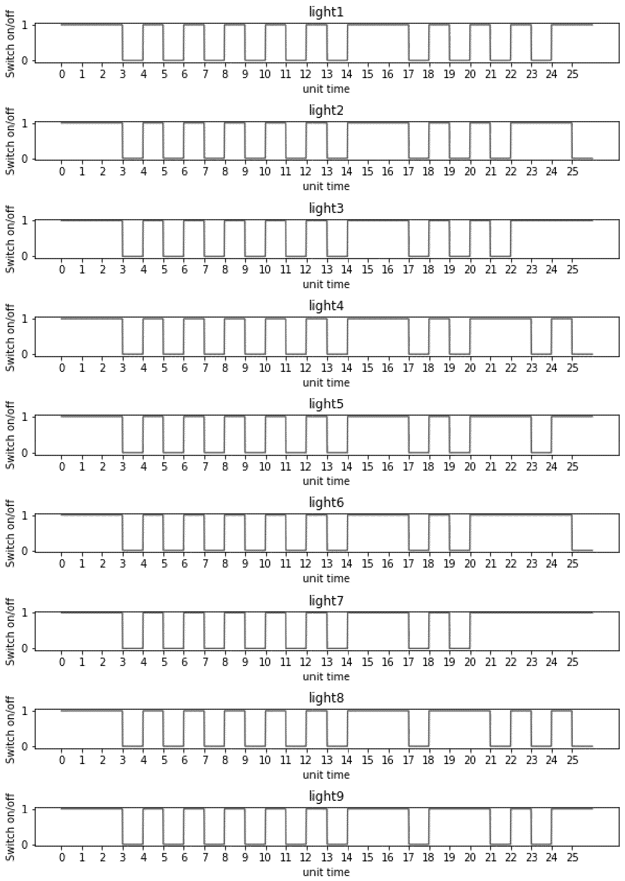

An example of an aircraft landing control system of embodiments of the present disclosure is described in detail below with reference to Figures 4 to 6.

As shown in FIG. 4, the lights array located on the ground uses 18 LED lights as guiding lights. They are arranged on the vertices of concentric squares centered on the light D10, and the side lengths of the outer circles of two neighboring circles of these concentric squares are twice the length of the inner circles, for the convenience of the aircraft accurately estimating the position and attitude of the aircraft by using the currently captured images whenever the lights array is captured by the aircraft at different flight altitudes.

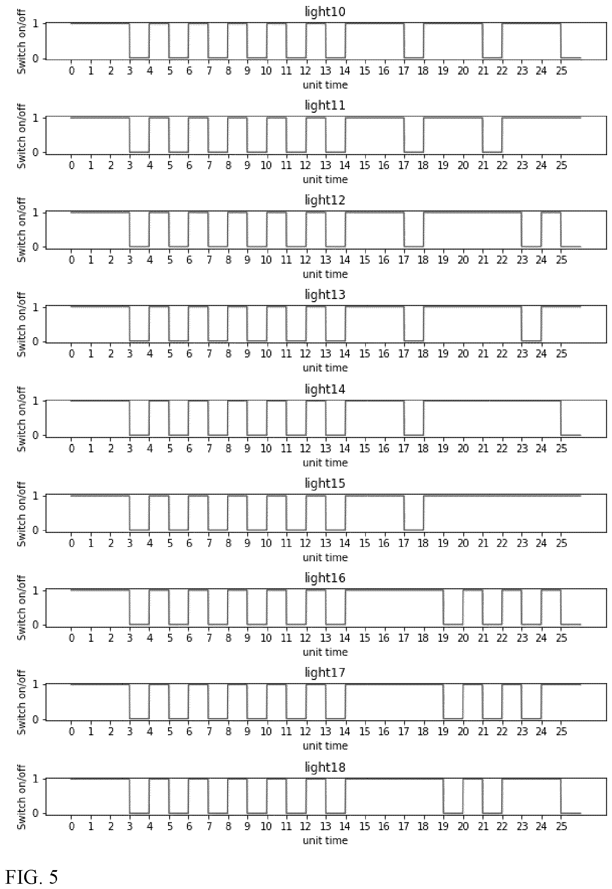

The flashing patterns of these 18 LEDs in this example are shown in Figure 5, where the light 1 represents D1, and so on:

The light flashing patterns are given below in binary form, where "1" means on and "0" means off:

1 1 1 0 1 0 1 0 1 0 1 0 1 0 1 1 1 a 1 b 1 c 1 d 1 e

As seen in the binary form of the lights flashing pattern, in each cycle of these LEDs, the first 14 beats are provided as the checking digit of these lights, that is, as long as the first 14 beats of the detected lights are flashing in this specific pattern, it is assumed that the detected lights are the lights on this lights array. The 15th to the 17th beats are provided as the starting mark with three consecutive beats of the independent checking digit of the lights, followed by abcde as the binary number of the LED lights, such as the light of number 1, in its flashing cycle abcde = 00001, and the light of number 8, in its flashing cycle abcde = 01000, and so on. The numbers are separated by "1".

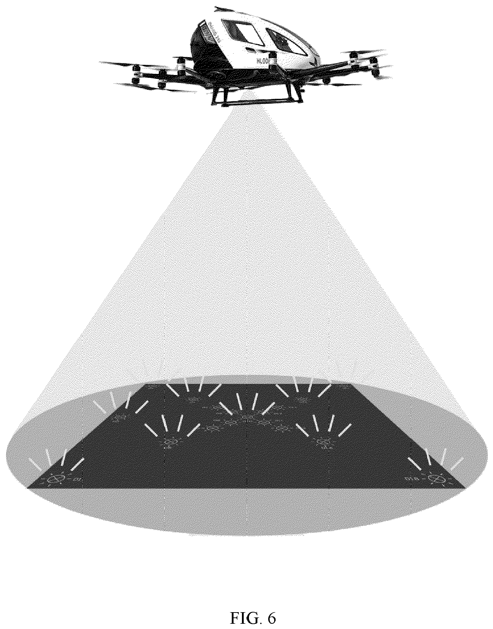

A camera is mounted on the aircraft, and the images of the lights array captured by the camera are shown in FIG. 6, each frame of the images captured by the camera is inputted into the aircraft control unit 201 for the following process:

After each frame has been grayscale map transformed, Gaussian filtered, and binarizated, the bright spots in the image are detected by an algorithm of pixel exclusion and connected region detection, which corresponds to each light, and the pixel coordinates (u, v) positions of the lights imaged on the image are given by calculating the center of mass of the connected region.

Matching and numbering of the same light in neighboring frames. The module completed the foregoing function with two steps: in the first step, calculates the nearest bright spot in the preceding frame before the current frame to the bright spot in the current frame, record the distance and number of the corresponding bright spot in the image; as same as calculates the nearest bright spot in the preceding frame to each of all the bright spots in the current frame, record the distance and number of the corresponding bright spot in the image.In the second step, determines the bright spots are matched unsuccessful by using the calculation results in the preceding step: if a bright spot in the current frame and a bright spot in the preceding frame are nearest to each other in this two neighboring frames, and the distance between the two spots is in preset threshold range, then determines the two spots are matchable, which means that the two spots are imaged respectively in this two frames of the same light, and then update the position and number of the light in the image to the position and number of the corresponding bright spot in the current frame. If two bright spots don't meet the foregoing conditions, determines they are matched unsuccessful, which in three cases:
1. The bright spot in the preceding frame nearest to the bright spot in the current frame and this bright spot in the current frame are not nearest to each other in this two neighboring frames.
2. the distance between the bright spot in the preceding frame nearest to the bright spot in the current frame and this bright spot in the current frame is greater than preset threshold.
3. the distance between the bright spot in the current frame and the bright spot in the preceding frame which nearest to this bright spot in the current frame is greater than preset threshold range.

For case 1 and case 2 , the algorithm determines that the light which was on in the preceding frame turning out in the current frame, due to the camera having a high enough frame rate, and the aircraft in the interval between a frame of time displacement distance is small, it can be approximately considered that the imaging position of the light in the image remains unchanged, so for the light turning out in the current frame, uses the position and number of the bright spot imaged by this light in the preceding frame. so that over time, the coordinates and numbers of all lights which ever turned on can be recorded to facilitate the subsequent calibration; for case 3, determines that some bright spot which was never on in the preceding frames turning on in the current frame.

Pre-numbering the bright spots in each frame can be completed by the foregoing operation to each frame of the images after the first frame, implements the update of the same bright spot in different frames of the matching and the position, and determines whether the lights corresponding to these bright spots in a new frame is on, so as to prepare for the next calibration of the light flashing mode.

After the matching of the bright spots imaged by the individual lights from frame to frame has been completed, the flashing pattern of a series of bright spots over a certain period of time can be recorded. Since the flashing patterns of the lights array are pre-programmable, they are known, and a matrix Modulation_Matrix is pre-used to store the complete flashing patterns of the individual lights over a flicker cycle and the numbers of the individual lights corresponding to the convention. Check the obtained flashing pattern of each bright spot against the flashing pattern of each light stored in the Modulation_Matrix,so as to determine the position of each light on the images.

After completing the calibration, i.e., the one-to-one correspondence between the bright spot on the image and the lights of the light-emitting array has been completed, and the position(ui, vi) of the bright spot on the image formed by the lights on the image is already known, then the coordinate system of the lights array can also be constructed, and the coordinates of the individual light(xi, yi, zi) can be obtained by measurement. In this example, the geometric center of the tenth light D 10 can be used as the coordinate origin, the plane where the lights array is located can be used as the xy plane, and the direction perpendicular to the lights array toward the light emission direction can be used as the z-axis positive direction, so as to construct the three-dimensional coordinate system of the lights array.

After obtaining the coordinates of the lights in the images and the coordinates of the lights array, take the coordinates with the camera internal reference matrix 'Camera_Matrix' and lens distortion Distortion obtained by pre-calibrating the cameras as the inputs to the function "solvepnp", so as to calculate the position and attitude of the output camera i.g. the aircraft, then fed the attitude of the aircraft estimated by the algorithm into the control program to control the aircraft for precise landing.

Embodiments of the present application also provide a computer-readable storage medium, the computer-readable storage medium is configured to store computer program codes that, when the computer program code is run on a computer, causes the computer to perform a method of any one of the possible implementations of each of the foregoing embodiments.

Embodiments of the present application also provide an electronic device, the electronic device includes a memory and a processor, the memory is configured to store computer instructions, the computer instructions implement a method of any one of the possible implementations of each of the foregoing embodiments when being processed for execution by the memory.

A person of ordinary skill in the art should appreciate that, in one or more of the foregoing examples, the functions described in the embodiments of the present application may be implemented by using hardware, software, firmware, or any combination thereof. When implemented by using software, the functions may be stored in a computer-readable medium or transmitted as one or more instructions or code on a computer-readable medium. The computer-readable media includes computer storage media and communication media, the communication media includes any medium that facilitates the transmission of a computer program from one location to another. The storage medium may be any usable medium which is accessible for any general or specialized computer.

It should be noted that the foregoing descriptions are only examples of embodiments of the present disclosure and the technical principles used. A person of ordinary skill in the art should understand that the present disclosure is not limited to the specific embodiments described herein, and that various obvious changes, readjustments, and substitutions can be made by a person of ordinary skill in the art without departing from the scope of protection of the present disclosure. Therefore, although the present disclosure is described in more detail through the above embodiments, the present disclosure is not limited to the above embodiments, and may include additional equivalent embodiments without departing from the concept of the present disclosure, and the scope of the present disclosure is determined by the scope of the attached claims.

## Claims

1. A guiding apparatus for aircraft landing, wherein comprising:
a light-emitting array, disposed in a target landing area of an aircraft, comprising at least one light-emitting unit located at a target landing point and a plurality of light-emitting units arranged around the at least one light-emitting unit;
a light-emitting control unit, electrically connected to the light-emitting array, and configured to control the light-emitting array to emit lights in accordance with preset light-emitting timing.

2. The guiding apparatus for aircraft landing according to claim 1, wherein: the plurality of light-emitting units are arranged in N circles centered on the target landing point, where N is an integer greater than or equal to 1.

3. The guiding apparatus for aircraft landing according to claim 2, wherein:
the distance between the light-emitting units arranged in the M-th circle and the target landing point is preset multiples of the distance between the light-emitting units arranged in the M-1st circle and the target landing point, where M is an integer greater and 1 < M≤N.

4. The guiding apparatus for aircraft landing according to claim 3, wherein the circle is of regular or irregular shape.

5. The guiding apparatus for aircraft landing according to anyone of claims 1 to 4, wherein:
the light-emitting timing comprises an array checking segment including at least one light-emitting unit and an unit checking segment including at least one light-emitting unit.

6. The guiding apparatus for aircraft landing according to claim 5, wherein:
the flight instruction segment comprises a timing code including a plurality of light-emitting units, and at least one spacing code provided between the plurality of the timing codes.

7. A method for guiding aircraft landing, wherein comprising the step of:
controlling the guiding apparatus for aircraft landing according to any one of claims 1 to 6 to emit light in accordance with preset light-emitting timing.

8. An aircraft landing control method, wherein comprising the steps of:
controlling the guiding apparatus for aircraft landing according to any one of claims 1 to 6 to emit light in accordance with a preset light-emitting timing;
gathering light signals emitted by the light-emitting array on the aircraft, and controlling the aircraft to land to the target landing point by outputting corresponding flight control instructions in accordance with the gathered light signals.

9. The aircraft landing control method according to claim 8, wherein the step of outputting corresponding flight control instructions in accordance with the gathered light signals comprises:
identifying the light-emitting timing and light-emitting positions of the light signals;
matching the light-emitting timing with the preset light-emitting timing to calculate the position of each light-emitting unit;
obtaining the real-time position, attitude and target landing point of the aircraft in accordance with the positions of the light-emitting units.

10. The aircraft landing control method according to claim 9, wherein the step of identifying the light-emitting timing and light-emitting positions of the light signals comprises:
obtaining the movement trajectory of bright spots, the movement trajectory comprises the positions of the bright spots in each frame;
determining the light-emitting timing and light-emitting positions of each light-emitting unit in accordance with the movement trajectory of the bright spots.

11. The aircraft landing control method according to claim 10, wherein the step of obtaining the movement trajectory of bright spots comprises:
obtaining the Q-th bright spot of the current frame, Q being an integer and 1 ≤ Q ≤ the number of all bright spots of the current frame;
obtaining the P-th bright spot of the preceding frame, which is the closest bright spot to the Q-th bright spot in the preceding frame, P being an integer and 1 ≤ P ≤ the number of all bright spots of the preceding frame;
determining whether the Q-th bright spot is the closest bright spot to the P-th bright spot in the current frame, if so and the distance between them is within a preset threshold, then the two bright spots are the images respectively in the preceding frame and the current frame of the same light-emitting unit;
traversing Q from 1 to the number of all bright spots in the current frame, repeating the steps of obtaining the movement trajectory of bright spots.

12. The aircraft landing control method according to claim 11, wherein the step of obtaining the movement trajectory of bright spots further comprises:
determining that the light-emitting unit corresponding to the P-th bright spot is out in the current frame if the Q-th bright spot is not the closest bright spot to the P-th bright spot in the current frame.

13. The aircraft landing control method according to claim 11, wherein the step of obtaining the movement trajectory of bright spots further comprises:
determining that the light-emitting unit corresponding to the P-th bright spot is out in the current frame if the distance between the Q-th bright spot and the P-th bright spot is greater than a preset threshold range.

14. The aircraft landing control method according to claim 12, wherein the step of obtaining the movement trajectory of bright spots further comprises:
determining that the light-emitting unit corresponding to the Q-th bright spot is on in the current frame if the distance between the Q-th bright spot and the P-th bright spot is greater than a preset threshold range.

15. An aircraft landing control system, wherein comprising:
a guiding apparatus for aircraft landing according to any one of claims 1 to 6;
a light signals gathering unit, which is configured to gather light signals emitted by the light-emitting array;
an aircraft control unit, electrically connected to the light signals gathering unit, configured to output corresponding flight control instructions to control the aircraft to land to a target landing point in accordance with the gathered light signals.

16. An aircraft landing control system according to claim 16, wherein the aircraft control unit is configured to:
calculate the real-time position, attitude and target landing point of the aircraft in accordance with the light-emitting timing and light-emitting positions;
output corresponding flight control instructions to control the aircraft to land to the target landing point in accordance with the real-time position, attitude and target landing point of the aircraft.

17. The aircraft landing control system according to claim 17, wherein the identifying the light-emitting timing and light-emitting positions of the light signals comprises.

18. The aircraft landing control system according to claim 18, wherein the obtaining the movement trajectory of bright spots comprises.

19. The aircraft landing control system according to claim 19, wherein the obtaining the movement trajectory of bright spots further comprises:
determining that the light-emitting unit corresponding to the P-th bright spot is out in the current frame if the Q-th bright spot is not the closest bright spot to the P-th bright spot in the current frame.

20. The aircraft landing control system according to claim 19, wherein: the obtaining the movement trajectory of bright spots further comprises.

21. The aircraft landing control system according to claim 20, wherein the obtaining the movement trajectory of bright spots further comprises.

22. A computer-readable storage medium, wherein: the computer-readable storage medium is configured to store computer program codes, when the computer program codes running on a computer, enable the computer to perform a method according to any one of claims 7 to 14.

23. An electronic device, comprising a memory and a processor, the memory is configured to store computer instructions, wherein: the computer instructions are configured to implement a method according to any of claims 7 to 14 when being processed for execution by the memory.
